# FASCICULE DE BREVET EUROPEEN

(11) **EP 3 964 479 B1**
(45) Date de publication et mention de la délivrance du brevet: **22.01.2025**
(21) Numéro de dépôt: 21306200.3
(22) Date de dépôt: 02.09.2021
(51) Int. Cl.: C01B 33/18, B01J 20/10, C04B 18/10, C02F 1/00, C02F 1/28, C02F 101/20, B01J 20/30

(54) **PROCÉDÉ DE PRÉPARATION D'UN MATÉRIAU SILICEUX À PARTIR DE BALLE DE RIZ**
VERFAHREN ZUR HERSTELLUNG EINES SILIZIUMHALTIGEN MATERIALS AUS REISSPELZEN
METHOD FOR PREPARING A SILICEOUS MATERIAL FROM A RICE BALL

(30) Priorité: 03.09.2020 FR 2008931
(43) Date de publication de la demande: 09.03.2022
(73) Titulaire: Commissariat à l'Energie Atomique et aux Energies Alternatives, 75015 Paris (FR); Centre National de la Recherche Scientifique, 75794 Paris Cedex 16 (FR); UNIVERSITE DE MONTPELLIER, 34090 Montpellier (FR); Ecole Nationale Supérieure de Chimie de Montpellier, 34296 Montpellier Cedex 5 (FR)
(72) Inventeur: RUSSO, Baptiste, 69400 GLEIZE (FR); REBISCOUL, Diane, 30290 LAUDUN (FR); AYRAL, André, 34670 SAINT-BRES (FR); CAUSSE, Jérémy, 30131 PUJAUT (FR); DESCHANELS, Xavier, 30330 LE PIN (FR)
(74) Mandataire: Brevalex

(56) Documents cités:
- EP-A1- 0 269 769
- CN-A- 101 673 781
- DATABASE WPI Week 200712, Derwent World Patents Index; AN 2007-120261, XP002802634
- XUE-GANG CHEN ET AL: "Thermal destruction of rice hull in air and nitrogen ; A systematic study", JOURNAL OF THERMAL ANALYSIS AND CALORIMETRY, KLUWER ACADEMIC PUBLISHERS, DORDRECHT, NL, vol. 104, no. 3, 8 December 2010 (2010-12-08), pages 1055 - 1062, XP019902866, ISSN: 1572-8943, DOI: 10.1007/S10973-010-1201-2

## Description

### Domaine technique

L'invention se rapporte au domaine de la valorisation de sous-produits ou résidus agricoles.

Plus spécifiquement, l'invention se rapporte à un procédé qui permet d'obtenir, à partir de balle de riz, un matériau siliceux structuré et résistant, doté d'une remarquable aptitude à extraire les cations métalliques de milieux aqueux.

L'invention se rapporte également à un procédé de traitement d'une eau telle que l'eau d'un cours d'eau, l'eau d'un plan d'eau, naturel ou artificiel, ou l'eau d'un effluent aqueux du type effluent urbain, industriel ou minier, notamment en vue de décontaminer cette eau en cations métalliques et, plus particulièrement, en cations de métaux lourds (Pb²⁺, Ni²⁺, Mn²⁺, Cu²⁺, ...), procédé dans lequel est mis en œuvre le procédé de préparation du matériau siliceux.

### État de la technique antérieure

On appelle « balle de riz », l'enveloppe la plus externe que présentent les grains de riz lorsque le riz est récolté - ce dernier étant appelé « riz paddy » ou « riz brut » - et que l'on sépare du reste des grains de riz lors de l'opération de décorticage du riz paddy.

La balle de riz représente environ 20 % de la masse du riz paddy mais les valeurs peuvent varier de 16 % à 28 % en fonction des variétés de riz et de la forme des grains.

La balle de riz est riche en cellulose brute (≈ 35 % m/m) et en silice (≈ 12 % m/m). Elle est donc fortement déconseillée en alimentation même animale.

En revanche, il est connu de la valoriser en litière pour animaux, en bioconstruction, notamment comme isolant thermique (par exemple, par remplissage de coffrages en bois), en biocombustible de substitution au bois de chauffe (par exemple, sous la forme de briquettes) et en sorbant pour le traitement de l'eau.

Dans cette dernière application, la balle de riz est typiquement utilisée sous la forme de cendres (ou « rice hull ash » en anglais) résultant d'une calcination.

Actuellement, le traitement des effluents aqueux urbains, industriels ou miniers, notamment en vue de décontaminer l'eau de ces effluents en métaux, est effectué à l'aide de divers procédés tels que la coagulation-floculation, la précipitation et l'électrolyse, qui mettent en œuvre des produits chimiques nocifs pour l'environnement et qui, pour certains comme l'électrolyse, impliquent une consommation d'électricité importante.

De ce fait, le traitement d'effluents aqueux par extraction sur matériau solide se développe notamment par le biais de l'utilisation du charbon actif. Cependant, le charbon actif est efficace principalement pour l'extraction de composés organiques mais il est peu efficace pour celle des métaux. À titre d'exemple, le charbon actif granulaire sans traitement supplémentaire (GAC) présente une capacité d'extraction du nickel de 0,51 mg/g de charbon actif (cf. P. Rodriguez-Estupiñán et al., Adsorption Science & Technology 2011, 29(6), 541-551).

Il est, par ailleurs, connu de préparer des matériaux siliceux à partir de balle de riz et d'utiliser ces matériaux dans des applications diverses.

Ainsi, par exemple, la demande de brevet CN-A-101673781 décrit un procédé pour préparer du silicium polycristallin destiné à la fabrication de cellules photovoltaïques, dans lequel un matériau siliceux est tout d'abord obtenu en soumettant une balle de riz à deux traitements thermiques successifs, chacun à une température de 500 °C à 590 °C mais l'un sous azote et l'autre sous air, puis le matériau siliceux ainsi obtenu est soumis à des traitements d'activation, de purification, de pelletisation et, enfin, de fusion réductrice pour conduire à du silicium polycristallin.

La demande de brevet EP-A-0 269 769 décrit l'utilisation d'une silice « biogénétique », c'est-à-dire issue de la combustion de plantes riches en silice, conjointement avec des particules actives du type charbon activé ou polymère gonflant dans l'eau pour filtrer un fluide tel qu'une eau sale de piscine, du trichloréthylène ou un flux d'air contenant du méthane et de l'éthane. La silice « biogénétique » est, par exemple, constituée de cendres de balle de riz disponibles dans le commerce, ayant été obtenues en traitant trois minutes une balle de riz à une température de 800 °C à 1400 °C.

Le brevet RU-C-2 292 305 décrit la préparation d'un matériau siliceux par traitement d'une balle de riz à une température comprise entre 300°C et 400°C et sous une atmosphère appauvrie en oxygène, ce matériau étant destiné à servir de sorbant pour décontaminer une eau sélectivement en plomb et en cuivre.

### Exposé de l'invention

L'invention a, en premier lieu, pour objet un procédé de préparation d'un matériau siliceux à partir de balle de riz, qui est capable d'extraire très efficacement les métaux d'un milieu aqueux et, par là même, de décontaminer des effluents urbains, industriels ou miniers en métaux sans ajout de produits chimiques ni apport d'énergie.

Ce procédé comprend les étapes suivantes :
a) une pyrolyse de la balle de riz à une température θ1 comprise entre 600 °C et 800 °C, sous une atmosphère inerte, pour obtenir des cendres, puis
b) un recuit des cendres obtenues à l'étape a) à une température θ2 comprise entre 300 °C et 600 °C tout en étant inférieure à θ1, sous une atmosphère oxydante,
moyennant quoi on obtient le matériau siliceux sous la forme d'une poudre.

Dans ce qui précède et ce qui suit, on entend par « atmosphère inerte », un milieu gazeux qui est chimiquement inactif au cours de la pyrolyse de la balle de riz et qui est donc incapable de réagir avec les constituants de cette balle de riz, tandis qu'on entend par « atmosphère oxydante », un milieu gazeux qui comprend au moins du dioxygène, éventuellement sous forme de dioxyde de carbone ou d'eau à l'état gazeux.

Conformément à l'invention, la température θ2 est, de préférence, comprise entre 400 °C et 500 °C.

Avantageusement, l'étape a) comprend :
i) une alimentation en un gaz inerte d'une première enceinte - ou enceinte E1 - dans laquelle est placée la balle de riz, et
ii) un chauffage de l'enceinte E1 jusqu'à atteindre la température θ1 et un maintien de la température θ1 pendant une durée d'au plus 5 heures, de préférence de 30 minutes à 2 heures.

Le gaz inerte peut être n'importe quel gaz inerte dans les conditions de la pyrolyse (hélium, argon, néon, diazote, etc.), préférence étant, toutefois, donnée à l'argon et au diazote.

Conformément à l'invention, l'enceinte E1 est alimentée en gaz inerte à un débit compris, de préférence, entre 0,5 L/heure et 10 L/heure et, mieux encore, entre 3 L/heure et 6 L/heure.

Par ailleurs, ii) comprend une montée en température de l'enceinte E1 préférentiellement de 1°C/minute à 20 °C/minute et, mieux encore, de 2 °C/minute à 10 °C/minute.

Dans un premier mode de mise en œuvre du procédé, l'étape a) comprend de plus, après ii) :
iii) une descente en température de l'enceinte E1, par refroidissement naturel ou accéléré, jusqu'à atteindre la température θ2, sans perte de l'atmosphère inerte régnant dans l'enceinte E1.

Auquel cas, l'étape b) comprend avantageusement :
- une alimentation de l'enceinte E1 en un gaz oxydant, et
- un maintien de la température θ2 pendant une durée d'au plus 5 heures, de préférence de 30 minutes à 2 heures.

Dans un deuxième mode de mise en œuvre du procédé, l'étape a) comprend de plus, après ii) :
iii) une descente en température de l'enceinte E1, par refroidissement naturel ou accéléré, jusqu'à atteindre la température ambiante, sans perte de l'atmosphère inerte régnant dans l'enceinte E1.

Auquel cas, selon une première modalité de ce deuxième mode de mise en œuvre, l'étape b) comprend avantageusement :
- une alimentation de l'enceinte E1 en un gaz oxydant, et
- un chauffage de l'enceinte E1 jusqu'à atteindre la température θ2 et un maintien de la température θ2 pendant une durée d'au plus 5 heures, de préférence de 30 minutes à 2 heures.

Toutefois, selon une deuxième modalité de ce deuxième mode de mise en œuvre, l'étape b) peut également être réalisée dans une deuxième enceinte - ou enceinte E2 - différente de l'enceinte E1, auquel cas le procédé comprend de plus, après iii), un transfert des cendres obtenues à l'étape a) de l'enceinte E1 vers l'enceinte E2.

Auquel cas, l'étape b) comprend avantageusement :
- une alimentation de l'enceinte E2 en un gaz oxydant, et
- un chauffage de l'enceinte E2 jusqu'à atteindre la température θ2 et un maintien de la température θ2 pendant une durée d'au plus 5 heures, de préférence de 30 minutes à 2 heures.

Quel que soit le mode de mise en œuvre du procédé, le gaz oxydant est, préférentiellement de l'air ou du dioxygène, étant entendu qu'il pourrait aussi être du dioxyde de carbone ou de l'eau à l'état gazeux.

Par ailleurs, quel que soit le mode de mise en œuvre du procédé, l'alimentation en gaz oxydant de l'enceinte E1 ou E2 selon le cas est réalisée à un débit préférentiellement compris entre 0,5 L/heure et 10 L/heure et, mieux encore, entre 3 L/heure et 6 L/heure.

Conformément à l'invention, le procédé peut être appliqué à la balle de riz telle qu'obtenue à l'issue du décorticage du riz paddy.

En variante, toutefois, la balle de riz peut aussi être soumise, préalablement à l'étape a), à un ou plusieurs rinçages, de préférence à l'eau.

Par ailleurs, selon l'usage auquel il est destiné, le matériau siliceux, qui se présente sous la forme d'une poudre à l'issue de l'étape b), peut être :
- conservé et conditionné sous cette forme, que ce soit en vrac pour, par exemple, son utilisation en suspension dans un milieu aqueux ou son utilisation pour le garnissage de dispositifs du type de ceux classiquement utilisés pour la décontamination de milieux aqueux (colonnes de chromatographie par exemple), ou bien en dispositifs prêts à l'emploi du type cartouches, ou bien
- être mis en forme, notamment par compression sous la forme de granulés, de billes, de pellets, de pastilles ou analogues, auquel cas le procédé comprend, de plus, une compression de la poudre obtenue à l'étape b).

L'invention a aussi pour objet un procédé de traitement d'une eau, qui comprend :
- une préparation d'un matériau siliceux par un procédé tel que précédemment défini, et
- une mise en contact du matériau siliceux avec l'eau à traiter puis une séparation du matériau siliceux de l'eau traitée.

Conformément à l'invention, le traitement de l'eau est, de préférence, une décontamination en cations métalliques et, plus spécifiquement, en cations de métaux lourds (Pb²⁺, Ni²⁺, Mn²⁺, Cu²⁺, ...).

Par ailleurs, l'eau à traiter peut être toute sorte d'eau telle que l'eau d'un cours d'eau, l'eau d'un plan d'eau, naturel ou artificiel, ou l'eau d'un effluent aqueux comme un effluent urbain, industriel ou minier.

D'autres caractéristiques et avantages de l'invention ressortiront du complément de description qui suit, lequel n'est donné qu'à titre d'illustration de l'objet de l'invention et ne constitue en aucun cas une limitation de cet objet.

### Brève description de la figure

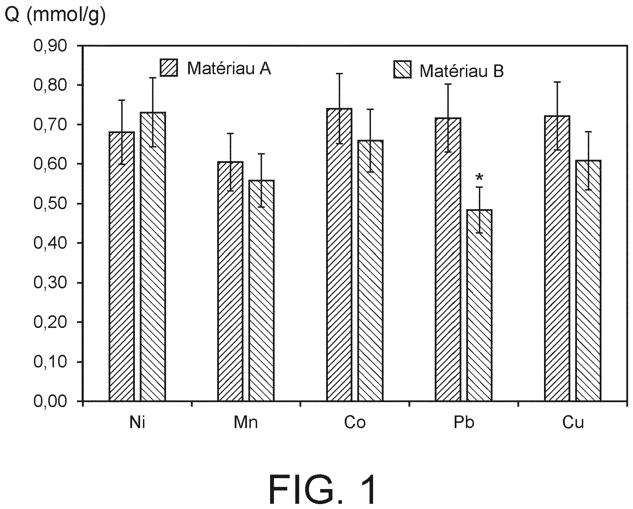

La figure 1 illustre la capacité, notée Q et exprimée en mmol de métal/g de matériau, de deux matériaux siliceux préparés par le procédé de l'invention, respectivement matériau A et matériau B, à extraire le nickel, le manganèse, le cobalt, le plomb et le cuivre à l'état de cations de solutions aqueuses.

### Exposé détaillé d'un mode de mise en œuvre particulier

### I - Exemple de mise en œuvre du procédé de l'invention :

On prépare un matériau siliceux par le procédé de l'invention - dit ci-après matériau A - en mettant en œuvre ce procédé selon le mode décrit ci-après, dans lequel les étapes de pyrolyse et de recuit sont réalisées dans un seul et même four avec un retour à l'ambiante de la température du four entre les étapes de pyrolyse et de recuit.

Dans ce mode de mise en œuvre, on procède de la manière suivante :
1) on introduit 100 g de balle de riz dans un creuset en céramique, que l'on étale au mieux dans le creuset pour éviter la présence de monticules susceptibles de gêner la décomposition de la balle de riz au cours de l'étape de pyrolyse, puis on place le creuset dans un four à moufle ;
2) on alimente le four en argon à un débit de 5 L/heure ;
3) on chauffe le four avec un gradient de montée de température de 5 °C/min jusqu'à atteindre la température de 700 °C que l'on maintient ensuite pendant 1 heure ;
4) on arrête le chauffage du four ainsi que son alimentation en argon et on laisse la température du four revenir à l'ambiante tout en laissant le creuset à l'intérieur du four ;
5) on alimente le four en air à un débit de 5 L/heure ;
6) on chauffe le four avec un gradient de montée en température de 5 °C/min jusqu'à atteindre la température de 500 °C que l'on maintient ensuite pendant 1 heure ;
7) on arrête le chauffage du four ainsi que son alimentation en air et on laisse la température du four revenir à l'ambiante tout en laissant le creuset à l'intérieur du four ; puis
8) on sort le creuset du four et on récupère le matériau siliceux.

### II - Caractéristiques et propriétés du matériau siliceux obtenu par le procédé de l'invention et comparaison avec deux matériaux siliceux obtenus par des procédés différents :

On prépare deux matériaux siliceux à partir de la même balle de riz que celle utilisée dans le procédé décrit au point I ci-avant mais par des procédés différents du procédé de l'invention.

Ces matériaux étant préparés à des fins purement comparatives, ils sont respectivement dénommés ci-après « matériau comparatif 1 » et « matériau comparatif 2 ».

Le matériau comparatif 1 est obtenu par une calcination « à haute température » sous une atmosphère oxydante, c'est-à-dire par un procédé reprenant les étapes 1) à 4) du procédé décrit au point I ci-avant à ceci près que, d'une part, l'argon est remplacé par de l'air à l'étape 2) et, d'autre part, le matériau est récupéré à l'issue de l'étape 4).

Le matériau comparatif 2 est, lui, obtenu par une calcination « à basse température » sous une atmosphère oxydante, c'est-à-dire par un procédé reprenant les étapes 1) et 5) à 8) du procédé décrit au point I ci-avant.

### II.1 - Caractéristiques physico-chimiques des matériaux :

Le matériau comparatif 1 se compose de cendres exclusivement minérales et, donc, totalement décarbonées avec un taux massique de silice supérieur ou égal à 90 %. La silice est principalement présente sous une forme amorphe mais est également présente sous une forme légèrement cristalline. Le matériau présente une surface spécifique, telle que mesurée par la méthode Brunauer, Emmett et Teller (ou méthode BET), de 15 m²/g, et une distribution des tailles de pores, telle que déterminée par la méthode de Barrett, Joyner et Halenda (ou méthode BJH), qui, bien que large, reste néanmoins dans le domaine de la mésoporosité avec des pores ayant des diamètres centrés sur 15 nm et compris entre 7 et 40 nm.

Le matériau comparatif 2 se compose de cendres de silice exclusivement amorphe avec un taux massique de carbone de 0,3 %. Il présente une surface spécifique BET de 80 m²/g et une distribution des tailles de pores centrée sur 6,5 nm. Ce matériau est très friable et difficile à mettre en forme.

Le matériau A, obtenu par le procédé de l'invention, présente un taux massique de carbone de 0,3 %, ce qui est très faible par rapport au taux massique de carbone de 52,3 % que présente le matériau à l'issue de l'étape 4) du procédé décrit au point I ci-avant. Il se compose de cendres de silice, avec un taux massique de silice supérieur ou égal à 90 %, qui ne présentent pas du tout les mêmes caractéristiques que le matériau comparatif 1 en termes de surface spécifique et de distribution des tailles de pores.

En effet, le matériau A présente une surface spécifique BET de 85 m²/g, soit 5 fois plus élevée que celle du matériau comparatif 1 ayant été obtenu par une calcination à 700°C sous air, ce qui est significatif d'une modification de la structure de la silice. Il présente une porosité mieux organisée et une distribution des tailles de pores plus restreinte que celles du matériau comparatif 1, avec un pic centré à 7 nm.

Les caractéristiques physico-chimiques du matériau A sont donc proches de celles du matériau comparatif 2 ayant été obtenu par une calcination à 500 °C sous air. Toutefois, il présente un grain résiduel plus gros, ce qui rend plus aisées sa manipulation et sa mise en forme et, partant, ses utilisations.

### II.2 - Propriétés d'extraction des matériaux :

Des tests d'extraction sont réalisés en utilisant des solutions aqueuses concentrées en un seul cation métallique (Ni²⁺, Pd²⁺, Cd²⁺, ...) à hauteur de :
- 2 mmol/L pour le matériau comparatif 1, et
- 8 mmol/L pour le matériau comparatif 2 et pour le matériau A, obtenu par le procédé de l'invention.

Pour ce faire, 100 mg des matériaux sont ajoutés à 10 mL de solution aqueuse et les mélanges sont maintenus sous agitation pendant 24 heures. Après filtration, la concentration des cations métalliques est mesurée dans les filtrats et la capacité d'extraction des matériaux, notée Q et exprimée en mmol de métal/g de matériau, est déterminée en soustrayant la quantité de métal retrouvée dans les filtrats de la quantité de métal qui était initialement présente dans les 10 mL de solution aqueuse et en rapportant la différence ainsi obtenue à 1 g de matériau.

Les résultats sont présentés dans le tableau I ci-après dans lequel la capacité d'extraction Q des matériaux est exprimée sous la forme d'une valeur moyenne obtenue pour l'ensemble des cations extraits.

**Tableau I**

| **Matériau** | **Q** (mmol de métal/g de matériau) | **Temps pour atteindre 90 % de l'équilibre** (heures) |
|---|---|---|
| Matériau A | 0,65 ± 0,07 | 5 |
| Matériau comparatif 1 | 0,20 ± 0,02 | 24 |
| Matériau comparatif 2 | 0,60 ± 0,07 | 24 |

Ce tableau montre que, non seulement le matériau A, obtenu par le procédé de l'invention, est capable d'extraire une quantité plus élevée de métal, par gramme de matériau, que les matériaux comparatifs 1 et 2, mais également que l'équilibre d'extraction est atteint beaucoup plus rapidement avec le matériau A qu'il ne l'est avec les matériaux comparatifs 1 et 2, ce qui permet d'envisager des cadences d'extraction supérieures à celles qui pourraient être obtenues avec lesdits matériaux comparatifs 1 et 2.

Des tests d'extraction complémentaires sont réalisés avec le matériau A en utilisant des solutions aqueuses comprenant du nickel, du manganèse, du cobalt, du plomb ou du cuivre sous forme cationique, concentrées respectivement à 8,02 mmol/L, 7,35 mmol/L, 12,64 mmol/L, 7,71 mmol/L et 10,53 mmol/L.

Comme précédemment, 100 mg du matériau A sont ajoutés à 10 mL de chaque solution aqueuse et les mélanges ainsi obtenus sont maintenus sous agitation pendant 24 heures.

Après filtration, la concentration des cations métalliques est mesurée dans les filtrats et la capacité d'extraction du matériau A, notée Q et exprimée en mmol de métal/g de matériau, est déterminée en soustrayant la quantité de métal retrouvée dans les filtrats de la quantité de métal qui était initialement présente dans les 10 mL de solution aqueuse et en rapportant la différence ainsi obtenue à 1 g de matériau.

Les résultats sont présentés dans le tableau II ci-après ainsi que sur la figure 1 annexée.

**Tableau Il**

| | Ni | Mn | **Co** | **Pb** | **Cu** |
|---|---|---|---|---|---|
| **Q** (mmol de métal/g de matériau) | 0,68 ± 0,08 | 0,60 ± 0,07 | 0,74 ± 0,09 | **0,72** ± 0,08 | 0,72 ± 0,09 |

Ce tableau et la figure 1 confirment que le matériau A présente une aptitude remarquable à extraire des cations métalliques de solutions aqueuses et, notamment, des cations de métaux lourds.

### III - Autre exemple de mise en œuvre du procédé de l'invention et propriétés d'extraction du matériau siliceux obtenu :

On prépare un autre matériau siliceux par le procédé de l'invention - dit ci-après matériau B - en suivant un protocole opératoire similaire à celui décrit au point I ci-avant, à ceci près que :
- la pyrolyse de la balle de riz est effectuée à une température de 800 °C (au lieu de 700 °C), également sous argon, tandis que
- le recuit des cendres obtenues à l'issue de cette pyrolyse est effectué à 400 °C (au lieu de 500 °C), également sous air.

Des tests d'extraction sont réalisés avec le matériau B en utilisant des solutions aqueuses comprenant du nickel, du manganèse, du cobalt, du plomb ou du cuivre sous forme cationique, concentrées respectivement à 9,97 mmol/L, 5,92 mmol/L, 9,33 mmol/L, 4,83 mmol/L et 10,23 mmol/L.

Ces tests d'extraction sont réalisés en suivant un protocole opératoire similaire à celui décrit au point II.2 ci-avant et la capacité d'extraction Q du matériau B est également déterminée de manière similaire.

Les résultats sont présentés dans le tableau III ci-après ainsi que sur la figure 1 annexée.

**Tableau III**

| | **Ni** | **Mn** | **Co** | **Pb*** | **Cu** |
|---|---|---|---|---|---|
| **Q** (mmol de métal/g de matériau) | 0,73 ± 0,09 | 0,56 ± 0,07 | 0,66 ± 0,08 | 0,48 ± 0,06 | 0,61 ± 0,07 |

| | | | | | |
|---|---|---|---|---|---|
| * Taux d'extraction de 99,9 % | | | | | |

Ce tableau et la figure 1 montrent que les propriétés d'extraction du matériau B sont tout aussi remarquables que celles du matériau A.

### Références citées

P. Rodriguez-Estupiñán et al., Adsorption Science & Technology 2011, 29(6), 541-551 CN-A-101673781
EP-A-0 269 769
RU-C-2 292 305

## Revendications

1. Procédé de préparation d'un matériau siliceux à partir de balle de riz, qui comprend les étapes suivantes :
a) une pyrolyse de la balle de riz à une température θ1 comprise entre 600 °C et 800 °C, sous une atmosphère inerte, pour obtenir des cendres, puis
b) un recuit des cendres obtenues à l'étape a) à une température θ2 comprise entre 300 °C et 600 °C tout en étant inférieure à θ1, sous une atmosphère oxydante,
moyennant quoi on obtient le matériau siliceux sous la forme d'une poudre.

2. Procédé selon la revendication 1, dans lequel la température θ2 est comprise entre 400 °C et 500 °C.

3. Procédé selon la revendication 1 ou la revendication 2, dans lequel l'étape a) comprend :
i) une alimentation en un gaz inerte, de préférence de l'argon ou de l'azote, d'une enceinte E1 dans laquelle est placée la balle de riz,
ii) un chauffage de l'enceinte E1 jusqu'à atteindre la température θ1 et un maintien de la température θ1 pendant une durée d'au plus 5 heures, de préférence de 30 minutes à 2 heures.

4. Procédé selon la revendication 3, dans lequel l'enceinte E1 est alimentée en gaz inerte à un débit compris entre 0,5 L/heure et 10 L/heure, de préférence entre 3 L/heure et 6 L/heure.

5. Procédé selon la revendication 3 ou la revendication 4, dans lequel ii) comprend une montée en température de l'enceinte E1 de 1 °C/minute à 20 °C/minute, de préférence de 2 °C/minute à 10 °C/minute.

6. Procédé selon l'une quelconque des revendications 3 à 5, dans lequel l'étape a) comprend de plus, après ii) :
iii) une descente en température de l'enceinte E1 jusqu'à atteindre la température θ2, sans perte de l'atmosphère inerte régnant dans l'enceinte E1.

7. Procédé selon la revendication 6, dans lequel l'étape b) comprend :
- une alimentation de l'enceinte E1 en un gaz oxydant, de préférence de l'air ou du dioxygène, et
- un maintien de la température θ2 pendant une durée d'au plus 5 heures, de préférence de 30 minutes à 2 heures.

8. Procédé selon l'une quelconque des revendications 3 à 5, dans lequel l'étape a) comprend de plus, après ii) :
iii) une descente en température de l'enceinte E1 jusqu'à atteindre la température ambiante, sans perte de l'atmosphère inerte régnant dans l'enceinte E1.

9. Procédé selon la revendication 8, dans lequel l'étape b) comprend :
- une alimentation de l'enceinte E1 en un gaz oxydant, de préférence de l'air ou du dioxygène, et
- un chauffage de l'enceinte E1 jusqu'à atteindre la température θ2 et un maintien de la température θ2 pendant une durée d'au plus 5 heures, de préférence de 30 minutes à 2 heures.

10. Procédé selon la revendication 7 ou la revendication 9, dans lequel l'enceinte E1 est alimentée en gaz oxydant à un débit compris entre 0,5 L/heure et 10 L/heure, de préférence entre 3 L/heure et 6 L/heure.

11. Procédé selon la revendication 8, dans lequel l'étape b) est réalisée dans une enceinte E2 différente de l'enceinte E1 et le procédé comprend de plus, après iii), un transfert des cendres obtenues à l'étape a) de l'enceinte E1 vers l'enceinte E2.

12. Procédé selon la revendication 11, dans lequel l'étape b) comprend :
- une alimentation de l'enceinte E2 en un gaz oxydant, de préférence de l'air ou du dioxygène, et
- un chauffage de l'enceinte E2 jusqu'à atteindre la température θ2 et un maintien de la température θ2 pendant une durée d'au plus 5 heures, de préférence de 30 minutes à 2 heures.

13. Procédé selon la revendication 12, dans lequel l'enceinte E2 est alimentée en gaz oxydant à un débit compris entre 0,5 L/heure et 10 L/heure, de préférence entre 3 L/heure et 6 L/heure.

14. Procédé de traitement d'une eau, qui comprend :
- une préparation d'un matériau siliceux par un procédé selon l'une quelconque des revendications 1 à 13 ;
- une mise en contact du matériau siliceux avec l'eau à traiter puis une séparation du matériau siliceux de l'eau traitée.

15. Procédé selon la revendication 14, dans lequel le traitement de l'eau est une décontamination en cations métalliques.

## Patentansprüche

1. Verfahren zum Herstellen eines silikatischen Materials aus Reisspelzen, das die folgende Schritte umfasst:
a) Pyrolysieren der Reisspelzen bei einer Temperatur θ1 zwischen 600 °C und 800 °C unter einer inerten Atmosphäre, um Asche zu erhalten, dann
b) Glühen der in Schritt a) erhaltenen Asche bei einer Temperatur θ2 zwischen 300 °C und 600 °C, die niedriger als θ1 ist, unter einer oxidierenden Atmosphäre,
wodurch das silikatische Material in Form eines Pulvers erhalten wird.

2. Verfahren nach Anspruch 1, wobei die Temperatur θ2 zwischen 400 °C und 500 °C beträgt.

3. Verfahren nach Anspruch 1 oder Anspruch 2, wobei der Schritt a) Folgendes umfasst:
i) Zuführen eines Inertgases, vorzugsweise Argon oder Stickstoff, in eine Kammer E1, in die die Reisspelzen gegeben wurden,
ii) Erhitzen der Kammer E1 bis zum Erreichen der Temperatur θ1 und Halten der Temperatur θ1 für einen Zeitraum von höchstens 5 Stunden, vorzugsweise von 30 Minuten bis 2 Stunden.

4. Verfahren nach Anspruch 3, wobei in die Kammer E1 Inertgas mit einer Durchflussrate zwischen 0,5 I/Stunde und 10 I/Stunde, vorzugsweise zwischen 3 I/Stunde und 6 I/Stunde, zugeführt wird.

5. Verfahren nach Anspruch 3 oder Anspruch 4, wobei ii) einen Temperaturanstieg der Kammer E1 von 1 °C/Minute auf 20 °C/Minute, vorzugsweise von 2 °C/Minute auf 10 °C/Minute, umfasst.

6. Verfahren nach einem der Ansprüche 3 bis 5, wobei der Schritt a) nach ii) außerdem Folgendes umfasst:
iii) Absinken der Temperatur der Kammer E1 bis zum Erreichen der Temperatur θ2, ohne dass die in der Kammer E1 herrschende inerte Atmosphäre verloren geht.

7. Verfahren nach Anspruch 6, wobei der Schritt b) Folgendes umfasst:
- Zuführen eines oxidierenden Gases, vorzugsweise von Luft oder Sauerstoff, zur Kammer E1, und
- Aufrechterhalten der Temperatur θ2 für einen Zeitraum von höchstens 5 Stunden, vorzugsweise von 30 Minuten bis 2 Stunden.

8. Verfahren nach einem der Ansprüche 3 bis 5, wobei der Schritt a) nach ii) außerdem Folgendes umfasst:
iii) Absinken der Temperatur der Kammer E1 bis zum Erreichen der Umgebungstemperatur, ohne dass die in der Kammer E1 herrschende inerte Atmosphäre verloren geht.

9. Verfahren nach Anspruch 8, wobei der Schritt b) Folgendes umfasst:
- Zuführen eines oxidierenden Gases, vorzugsweise von Luft oder Sauerstoff, zur Kammer E1, und
- Erhitzen der Kammer E1 bis zum Erreichen der Temperatur θ2 und Aufrechterhalten der Temperatur θ2 für einen Zeitraum von höchstens 5 Stunden, vorzugsweise von 30 Minuten bis 2 Stunden.

10. Verfahren nach Anspruch 7 oder Anspruch 9, wobei in die Kammer E1 oxidierendes Gas mit einer Durchflussrate zwischen 0,5 I/Stunde und 10 I/Stunde, vorzugsweise zwischen 3 I/Stunde und 6 I/Stunde, zugeführt wird.

11. Verfahren nach Anspruch 8, wobei der Schritt b) in einer anderen Kammer E2 als der Kammer E1 durchgeführt wird und das Verfahren außerdem nach iii) ein Übertragen der in Schritt a) erhaltenen Asche von der Kammer E1 zu der Kammer E2 umfasst.

12. Verfahren nach Anspruch 11, wobei das Schritt b) Folgendes umfasst:
- Zuführen eines oxidierenden Gases, vorzugsweise von Luft oder Sauerstoff, zur Kammer E2, und
- Erhitzen der Kammer E2 bis zum Erreichen der Temperatur θ2 und Aufrechterhalten der Temperatur θ2 für einen Zeitraum von höchstens 5 Stunden, vorzugsweise von 30 Minuten bis 2 Stunden.

13. Verfahren nach Anspruch 12, wobei in die Kammer E2 oxidierendes Gas mit einer Durchflussrate zwischen 0,5 I/Stunde und 10 I/Stunde, vorzugsweise zwischen 3 I/Stunde und 6 I/Stunde, zugeführt wird.

14. Verfahren zum Aufbereiten von Wasser, das Folgendes umfasst:
- Herstellen eines silikatischen Materials nach einem Verfahren nach einem der Ansprüche 1 bis 13;
- Inkontaktbringen des silikatischen Materials mit dem aufzubereitenden Wasser und dann Trennen des silikatischen Materials vom aufbereiteten Wasser.

15. Verfahren nach Anspruch 14, wobei das Aufbereiten des Wassers eine Dekontamination mit Metallkationen ist.

## Claims

1. A method for preparing a siliceous material from a rice ball, which comprises the following steps:
a) pyrolysis of the rice ball at a temperature θ1 comprised between 600°C and 800°C, under an inert atmosphere, to obtain ash, then
b) annealing the ash obtained in step a) at a temperature θ2 comprised between 300°C and 600°C while being lower than θ1, under an oxidising atmosphere,
whereby the siliceous material is obtained in the form of a powder.

2. The method according to claim 1, wherein the temperature θ2 is comprised between 400°C and 500°C.

3. The method according to claim 1 or claim 2, wherein step a) comprises:
i) supplying an inert gas, preferably argon or nitrogen, to an enclosure E1 in which the rice ball is placed,
ii) heating the enclosure E1 until reaching the temperature θ1 and maintaining the temperature θ1 for a period of at most 5 hours, preferably from 30 minutes to 2 hours.

4. The method according to claim 3, wherein the enclosure E1 is supplied with inert gas at a flow rate comprised between 0.5 L/hour and 10 L/hour, preferably between 3 L/hour and 6 L/hour.

5. The method according to claim 3 or claim 4, wherein ii) comprises a temperature increase of the enclosure E1 from 1°C/minute to 20°C/minute, preferably from 2°C/minute to 10°C/minute.

6. The method according to any one of claims 3 to 5, wherein step a) further comprises, after ii):
iii) a temperature decrease of the enclosure E1 until reaching the temperature θ2, without loss of the inert atmosphere prevailing in the enclosure E1.

7. The method according to claim 6, wherein step b) comprises:
- supplying the enclosure E1 with an oxidising gas, preferably air or dioxygen, and
- maintaining the temperature θ2 for a period of at most 5 hours, preferably from 30 minutes to 2 hours.

8. The method according to any one of claims 3 to 5, wherein step a) further comprises, after ii):
iii) lowering the temperature of the enclosure E1 until it reaches the ambient temperature, without loss of the inert atmosphere prevailing in the enclosure E1.

9. The method according to claim 8, wherein step b) comprises:
- supplying the enclosure E1 with an oxidising gas, preferably air or dioxygen, and
- heating the enclosure E1 until it reaches the temperature θ2 and maintaining the temperature θ2 for a duration of at most 5 hours, preferably from 30 minutes to 2 hours.

10. The method according to claim 7 or claim 9, wherein the enclosure E1 is supplied with an oxidising gas at a flow rate comprised between 0.5 L/hour and 10 L/hour, preferably between 3 L/hour and 6 L/hour.

11. The method according to claim 8, wherein step b) is carried out in an enclosure E2 different from the enclosure E1 and the method further comprises, after iii), a transfer of the ashes obtained in step a) from the enclosure E1 to the enclosure E2.

12. The method according to claim 11, wherein step b) comprises:
- supplying the enclosure E2 with an oxidising gas, preferably air or dioxygen, and
- heating the enclosure E2 until reaching the temperature θ2 and maintaining the temperature θ2 for a duration of at most 5 hours, preferably from 30 minutes to 2 hours.

13. The method according to claim 12, wherein the enclosure E2 is supplied with an oxidising gas at a flow rate comprised between 0.5 L/hour and 10 L/hour, preferably between 3 L/hour and 6 L/hour.

14. A method for treating water, which comprises:
- preparing a siliceous material by a method according to any one of claims 1 to 13,
- contacting the siliceous material with the water to be treated then separating the siliceous material from the treated water.

15. The method according to claim 14, wherein the water treatment is a metal cation decontamination.
